Europäisches Patentamt

European Patent Office

Office européen des brevets

(11) Veröffentlichungsnummer: **0 297 304 B1**

# EUROPÄISCHE PATENTSCHRIFT

(45) Veröffentlichungstag der Patentschrift: **23.12.92**

(51) Int. Cl.5: **B64C 9/24**, B64C 13/30

(21) Anmeldenummer: **88108852.0**

(22) Anmeldetag: **03.06.88**

(54) **Betätigungsanordnung für Vorflügel eines Luftfahrzeug Tragflügels.**

(30) Priorität: **30.06.87 DE 3721479**

(43) Veröffentlichungstag der Anmeldung:
**04.01.89 Patentblatt 89/01**

(45) Bekanntmachung des Hinweises auf die
Patenterteilung:
**23.12.92 Patentblatt 92/52**

(84) Benannte Vertragsstaaten:
**FR GB**

(56) Entgegenhaltungen:
**FR-A- 797 675**
**GB-A- 2 048 181**
**US-A- 3 272 458**

(73) Patentinhaber: **Deutsche Airbus GmbH**
**Kreetslag 10**
**W-2103 Hamburg 93(DE)**

(72) Erfinder: **Martens, Wilhelm**
**Brinkumer Strasse 3**
**W-2870 Delmenhorst(DE)**
Erfinder: **Ellmers, Wilfried**
**Am Illgarten 15**
**W-2807 Achim(DE)**

**Beschreibung**

Die Erfindung bezieht sich auf eine Verstellvorrichtung für in kreisförmigen Führungsschienen verfahrbare Vorflügel an Tragflügeln von Luftfahrzeugen mit Antriebseinheiten, die je über eine Antriebskurbel auf eine Schubstange einwirken, deren anderes Ende an einem Gelenk des mit den Führungsschienen verbundenen Vorflügels angelenkt ist.

Bei Luftfahrzeugen ist es bekannt, Vorflügel zur Verbesserung der Auftriebs- und Widerstandsverhältnisse am Tragflügel vorzusehen. Diese Vorflügel werden in der Regel mit Hilfe von Antriebseinrichtungen (z.B. Spindeltriebe) ein- und ausgefahren und durch Rollen, welche an einem am Vorflügel angeordneten Lenker gelagert sind, in einer Kurvenbahn geführt bzw. gesteuert. Für den Antrieb der Vorflügel können Antriebseinheiten benutzt werden, welche aus Kurbeltrieben, Schubstangen und Führungsschienen bestehen und die den Vorflügel auf einer etwa kreisförmigen Bahn von der starren Tragflügelnase abheben und stromaufwärts verfahren, wobei sich zwischen dem Vorflügel und der Tragflügelnase kontinuierlich ein Spalt öffnet, welcher sich bis zur maximalen Ausfahrposition vergrößert.

So ist aus der DE-PS 29 16 040.C2 ein Tragflügel mit beweglichen Vorflügeln bekannt, bei dem die Vorflügel über Schubstangen und daran angelenkte Antriebskurbeln von einer an der Tragfläche vorgesehenen gemeinsamen Antriebswelle verstellbar sind. Die Vorrichtungen zur Verstellung dieser Vorflügel bestehen aus jeweils einer Antriebskurbel, welche mit dem Ausgang eines von einer gemeinsamen Antriebswelle antreibbaren Getriebes formschlüssig verbunden sind, so daß die an den Antriebskurbeln mit einem Ende angelenkten Schubstangen in der eingefahrenen Position der Vorflügel in der Unterseitenkontur des Tragflügels liegen. Die zweiten Enden der Schubstangen sind dabei an je einem Flansch des Vorflügels angelenkt, welche in bekannter Weise über kreisförmige Führungsschienen aus- und/oder einfahrbar sind.

Diese Vorrichtung zur Vorflügelverstellung ist insofern unbefriedigend, da der Start, der Steigflug und die Landung äußerst ähnliche Vorflügelstellungen verlangt, bei denen schon zu Beginn jedes Ausfahrvorganges der Vorflügel von der Tragflächennase abhebt, obwohl jeweils unterschiedliche aerodynamische Anforderungen gestellt werden. So besteht für den Start und den Steigflug der Wunsch, eine hohe Gleitzahl (optimales Verhältnis zwischen Auftrieb und Widerstand) zu erreichen, während für die Landung ein maximaler Auftrieb erwünscht ist.

Aufgabe der Erfindung ist es daher, eine Verstellvorrichtung für Vorflügel von Luftfahrzeugen zu schaffen, bei welcher eine einfache Anlenkung und Schienengestaltung eine Ausfahrbewegung für unterschiedliche aerodynamische Anforderungen gestattet.

Die erfindungsgemäße Lösung dieser Aufgabe ist dem kennzeichnenden Teil des Anspruchs zu entnehmen.

Zur Erläuterung der Erfindung ist der Beschreibung eine Zeichnung beigefügt.

Die Verstellvorrichtung befindet sich im eingefahrenen Zustand des Vorflügels 1 innerhalb des Tragflügels 9. Eine Antriebseinheit z.B. ein auf eine Kurbel 3 wirkendes und von einer zentralen Antriebseinrichtung über eine gemeinsame Transmissionswelle betätigtes Getriebe dient zum Verfahren des Vorflügels 1. Dazu ist die Kurbel 3 in an sich bekannter Weise formschlüssig mit dem Getriebe verbunden. Das freie Ende der Kurbel 3 ist an das hintere Ende einer Schubstange 2 angelenkt, deren vorderes Ende an einem Gelenktpunkt 8 am Vorflügel 1 angelenkt ist.

Von besonderer Bedeutung für die erfindungsgemäße Verstellvorrichtung ist, daß die Schubstange 2 in ihrer vorderen Hälfte mit einem Lenker 4 gekoppelt ist, der an einem Winkelhebel 5 angreift. Das andere Ende des Winkelhebels 5 ist über einen zweiten Lenker 6 an einer Stelle 10, oberhalb des Gelenkpunktes 8 am Vorflügel 1 angelenkt. Zur Steuerung der Fahrbewegung und zur Abstützung des hinteren Teils des Vorflügels 1 dient der Winkelhebel 5, dessen Gelenkpunkt 5a in der Führungsschiene 7 gelagert ist. Durch die kombinierte Steuerung der Schubstange 2 wird erreicht, daß der Vorflügel 1 in einem ersten Ausfahrbereich keinen und in einem zweiten Ausfahrbereich einen Spalt zur Tragflügelvorderkante öffnet.

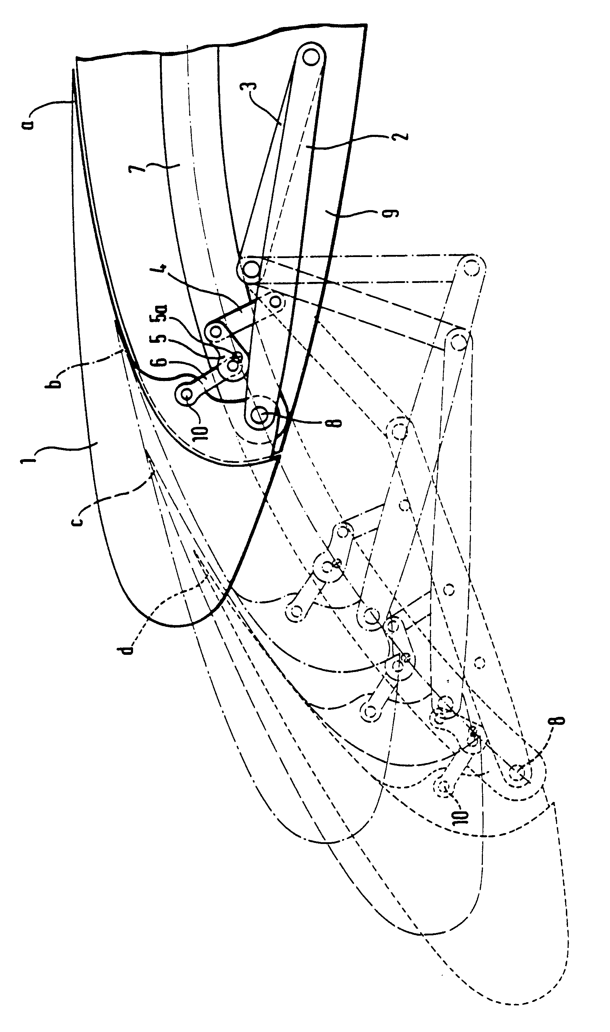

In der Zeichnung ist dargestellt, wie sich der Vorflügel 1 im eingefahrenen Zustand (a) eng an die starre Nase der Tragfläche 9 anlegt, während sich die erfindungsgemäße Verstellvorrichtung innerhalb der Tragfläche 9 befindet. Für den Start und den Steigflug wird der Vorflügel 1 auf eine erste Ausfahrposition (b) ausgefahren, bei der die Stellmechanik der Verstellvorrichtung dafür sorgt, daß der Vorflügel 1 an der Oberseite der Tragflügelnase angeschmiegt bleibt, ohne daß ein Spalt zwischen Tragflügelnase und Vorflügel 1 entsteht. Weitere Ausfahrstellungen (c,d) können mit der Stellmechanik z.B. für die Landung eingestellt werden. Dabei wird der Vorflügel 1 vollständig ausgefahren, der hintere Teil des Vorflügels 1 von der Tragflächennase abgehoben und zur Bildung eines möglichst großen Ausfahrwinkels zwischen Vorflügel 1 und Tragflügel 9 zur Anströmrichtung hin stark angestellt.

Bei über die Tragflächenlänge unterteilten Vorflügeln steht jedem Vorflügelsegment wenigstens eine Verstellvorrichtung, bestehend aus Antriebseinrichtung und Stellmechanik zur Verfügung.

**Patentansprüche**

1. Verstellvorrichtung für in kreisförmigen Führungsschienen (7) verfahrbare Vorflügel (1) an Tragflügeln (9) von Luftfahrzeugen mit Antriebseinheiten, die je über eine Antriebskurbel (3) auf eine Schubstange (2) einwirken, deren anderes Ende an einem Gelenk (8) des mit den Führungsschienen verbundenen Vorflügels angelenkt ist, dadurch gekennzeichnet, daß die Schubstange (2) im Bereich ihrer vorderen Hälfte mit einem Lenker (4) gekoppelt ist, dessen anderes Ende jeweils an einem in einer von den Führungsschienen (7) gelagerten Winkelhebel (5) angreift, und daß das andere Ende des Winkelhebels (5) über jeweils einen weiteren Lenker (6) am Vorflügel (1) oberhalb das Gelenk (8) angelenkt ist.

**Claims**

1. Adjusting device for slats (1), which are displacable in circular guide tracks (7), on wings (9) of aircraft having drive units which act, via a drive crank (3), on a pushrod (2) the other end of which is hinged to a hinge (8) of the slat which is connected to the guide tracks, **characterised in that** the pushrod (2) is in the area of its forward half coupled to a guide (4), the other end of which engages a respective angle lever (5) which is mounted in one of the guide tracks (7), and that the other end of the angle lever (5) is hinged to the slat (1) above the hinge (8) via a further guide (6).

**Revendications**

1. Dispositif positionneur pour positionner, sur des ailes porteuses (9) d'avions, des bords d'attaque (1) mobiles dans des rails de guidage arqués (7), comportant des unités d'entraînement qui agissent chacune, par une manivelle d'entraînement (3), sur une bielle (2) dont l'autre extrémité est articulée sur une articulation (8) du bord d'attaque lié aux rails de guidage, caractérisé par le fait que la bielle (2) est couplée, dans la région de sa moitié avant, à un bras pivotant (4) dont l'autre extrémité attaque un levier coudé (5) prenant appui dans l'un des rails de guidage (7), et par le fait que l'autre extrémité du levier coudé (5) est fixée de manière articulée au-dessus de l'articulation (8) par l'intermédiaire d'un autre bras pivotant (6).